# EUROPEAN PATENT SPECIFICATION

(11) **EP 0 638 108 B1**
(45) Date of publication and mention of the grant of the patent: **07.08.1996**
(21) Application number: 93909090.8
(22) Date of filing: 14.04.1993
(51) Int. Cl.: C08L 27/06, C08F 214/06

(54) **FLEXIBLE PVC MATERIAL CONTAINING GLYCIDYL ACRYLATE, WITH HIGH RESISTANCE TO HEAT AGEING, METHOD AND USE**
FELIXIBLES PVC MATERIAL ENTHALTEND GLYCIDYLACRYLAT MIT HOHER BESTÄNDIGKEIT GEGEN HITZEALTERUNG, SOWIE VERFAHREN ZUR HERSTELLUNG UND DESSEN VERWENDUNG
MATIERE SOUPLE A BASE DE PVC, CONTENANT DE L'ACRYLATE GLYCIDILYQUE, PRESENTANT UNE GRANDE RESISTANCE AU VIEILLISSEMENT THERMIQUE, SON PROCEDE DE PRODUCTION ET SON UTILISATION

(30) Priority: 30.04.1992 NO 921739
(43) Date of publication of application: 15.02.1995
(73) Proprietor: NORSK HYDRO A/S, 0240 Oslo 2 (NO)
(72) Inventor: DAHL, Roger, S-444 46 Stenungsund (SE)
(74) Representative: Bleukx, Luc
(86) International application number: NO9300062
(87) International publication number: WO9322378

(56) References cited:
- EP-A- 0 264 916
- EP-A- 0 358 067
- EP-A- 0 389 208
- EP-A- 0 481 325

## Description

The present invention concerns a procedure for preventing the reduction of flexibility of a plasticised material containing vinyl chloride after ageing at high temperature, a thermoplastic material containing vinyl chloride and an application of this material.

For individual areas of use such as, for example, for cables for application in the transport industry, one of the most important requirements is that the cable retain as much of its flexibility as possible after ageing at warm temperatures. According to the French standard for vehicle cables, NFR 13-415, a cable must tolerate fatigue tests carried out at -25°C after thermal ageing. For a type 3 cable in accordance with this standard, which is used in the engine room, among other places, the thermal ageing is carried out at 155°C for 240 hours.

According to Volvo's standard STD 7611,13 class 3, a cable must be able to withstand ageing at 170°C for 6 hours, and at 120°C for 1000 hours and then pass a cold bending test at -30°C.

It is thus important that the cables retain as much of their flexibility as possible after ageing. This is emphasised by the fact that the more flexibility a cable retains after ageing, the more rigid it can be made, which is of advantage for many of the other tests within the scope of the standard, such as, for example, the deformation test under heat, resistance to chemicals and resistance to wear.

It is difficult to find insulating materials which satisfy these requirements and the requirements of other standards for flexibility after ageing at a reasonable price and which do not require additional processing.

Polyvinyl chloride is a material which is easy to process and is relatively reasonably priced. However, PVC materials which are exposed to ageing at high temperature become more brittle on account of the fact that the material is broken down combined with a reduction in plasticiser. The loss of plasticiser means that there is a certain connection between the weight loss and the flexibility.

European patent No. 0 264 916 discloses the use of vinyl chloride copolymers in magnetic coatings. Glycidyl methacrylate (GMA) may be included in the copolymer if improved thermal stability is desired. The material does not contain plasticiser. In contrast to this, the main feature according to our invention is to maintain the flexibility in a plasticised system, which means that the loss of plasticiser is reduced. The method according to our invention relates to a better flexibility after heat ageing and not to improved thermal stability for the PVC containing polymer chain as such.

European patent No. 0 358 067 describes vinyl chloride copolymers of a given viscosity that comprises vinyl chloride, glycidylmethacrylate and a compound which can be copolymerized with the others. The use of GMA results in less yellowness of the product. However, there is no reference in this patent to that better flexibility after heat ageing can be obtained.

For differences in colour stability, there is no direct linkage to weight loss. A yellow coloured product is the result of decomposition of PVC containing polymer. This takes place when only 0.1 % of the polymer mass is liberated, which does not need to involve any weight loss in the composition, since the stabiliser takes care of the rest product.

From European patent application No. 0 389 208 it is known an interlayer comprising vinyl chloride resin with epoxy groups to be used to obtain adhesion to a safety glass. There is no mention in the application of that increased flexibility after heat ageing can be obtained, this would neither be important as this is not a high temperature use.

The object of the invention is thus to produce a material containing vinyl chloride which is flexible after ageing at high temperature. It is of special interest to produce materials which can be used in cables, particularly vehicle cables, hoses, seals and packings.

This is achieved by means of the procedure, product and use described below and the invention is described in more detail in the enclosed claims.

With this invention we have arrived at a method which makes it possible to use a plasticised thermoplastic material containing vinyl chloride at higher operating temperatures than possible for material based on a PVC homopolymer. The material has all the positive properties which such a material possesses such as good processing properties, good dyeing properties, good stripping properties, adapted flexibility, good printing possibilities and good resistance to chemicals.

The invention consists in wholly or partly replacing PVC with a copolymer based on VCM and small parts of glycidyl-containing comonomers such as glycidyl acrylate, glycidyl methacrylate or glycidyl butacrylate. The glycidyl-containing comonomers are used in a quantity of 0.1-10 weight %. The thermoplastic PVC material, which has good flexibility after ageing at high temperature, consists of polymer, plasticiser, thermostabiliser and other additives. The material contains 20-100 weight % of one copolymer in which the monomer consists of 80-99.9 weight % of VCM and 0.1-10 weight % of glycidyl-containing acrylate, 0-80 weight % of PVC and 0-80 weight % of other copolymers based on at least 70 % VCM. If required, the glycidyl-containing polymer may contain up to 10 weight % of another monomer such as, for example, vinyl acetate and acrylates which do not contain glycidyl such as methyl methacrylate, ethyl methacrylate and butyl methacrylate.

Common plasticisers suited to PVC are used. The plasticiser is added in a quantity of 20 -100 phr (phr = parts per 100 parts of polymer). It may also be possible to use polymers such as, for example, EVA (copolymer between ethene and vinyl acetate) or polyadipate as a plasticiser in such mixtures. Small quantities of other polymers can be added such as, for example, chlorinated polyethene, EVA, a terpolymer between ethene, vinyl acetate and carbon monoxide, EBA (a copolymer between ethene and butyl acrylate), polyadipates and nitrile rubber without the material losing its properties. The material is well suited for use in cables, particularly vehicle cables, hoses, sealing strips and packings.

The invention will be explained in more detail in the following examples. In the examples the quantities are given in phr.

### Tests

The cold-flex according to Clash and Berg (ISO 547) was measured in samples which had not been aged and in samples which had been aged for 240 hours at 155°C. The cold-flex measures the temperature at which a sample strip of approximately 1 mm thickness has a flex modulus of 310 MPa. The lower the temperature indicated, the more flexible the sample. The reduction in weight was measured as a comparison between the sample's weight before and after ageing for 240 hours at 155°C.

### Example 1

The following formulations were mixed in a small mixer at up to 110°C. They were then rolled at 170°C for 5 minutes and subsequently pressed at 190°C for 5 minutes. The pressed samples were aged in a cell fumace at 155°C for 240 hours.

**TABLE 1**

| Formulation | A1 | A2 | A3 |
|---|---|---|---|
| PVC homopolymer | 100 | - | - |
| Copolymer VCM:GMA 99:1 | - | 100 | - |
| Copolymer VCM:GMA 98:2 | - | - | 100 |
| Linear trimellitate¹ | 50 | 50 | 50 |
| Stabiliser/lubricant mix² | 8 | 8 | 8 |
| Oxidised polyethene wax³ | 0.1 | 0.1 | 0.1 |

| | | | |
|---|---|---|---|
| ¹ Softener for high-temperature applications | | | |
| ² Commercial stabiliser/lubricant mix based on tetrabasic lead sulphate | | | |
| ³ Lubricant | | | |

The results are shown in table 2:

**TABLE 2**

| Formulation | A1 | A2 | A3 |
|---|---|---|---|
| Cold-flex, non-aged sample (°C) | -20 | -20 | -21 |
| Cold-flex, aged sample (°C) | -9 | -14 | -19 |
| Weight loss (%) | 6.5 | 3.1 | 3.4 |

Table 2 shows that when PVC (homopolymer based on VCM) is replaced with a copolymer based on VCM and small parts of GMA, a material is obtained which tolerates ageing at high temperatures considerably better. While mixture A1, based on a homopolymer, has a 6.5 % weight loss after ageing at 155°C for 240 hours, mixtures A2 and A3, based on copolymers, have weight losses of about half of this. Mixture A1 loses approximately 12°C in cold-flex on account of ageing while A2 and A3 lose 6°C and 2°C respectively.

This effect is clearly unexpected as the thermostability for the pure polymers, without additives, is poorer for copolymers than for the homopolymer.

### Example 2

In order to investigate whether the effects in example 1 could have been achieved by other means than by replacing the polymer, tests were carried out with increased quantities of thermostabiliser, added epoxidised soya bean oil and added antioxidant. The formulations are shown in table 3.

**TABLE 3**

| Formulation | A1 | A4 | A5 | A6 |
|---|---|---|---|---|
| PVC homopolymer | 100 | 100 | 100 | 100 |
| Linear trimellitate | 50 | 50 | 50 | 50 |
| Stabiliser/lubricant mix | 8 | 10 | 8 | 8 |
| Oxidised polyethene wax | 0.1 | 0.1 | 0.1 | 0.1 |
| Epoxidised soya bean oil⁴ | - | - | 3 | - |
| Antioxidant | - | - | - | 0.2 |

| | | | | |
|---|---|---|---|---|
| ⁴ Auxiliary stabiliser with glycidyl groups | | | | |

Table 4 shows the measurements carried out on the formulations indicated in table 3.

**TABLE 4**

| Formulation | A1 | A4 | A5 | A6 |
|---|---|---|---|---|
| Cold-flex before ageing (°C) | -20 | -20 | -23 | -22 |
| Cold-flex after ageing (°C) | -9 | -3 | -7 | -10 |
| Weight loss (%) | 6.5 | 8.0 | 7.2 | 6.9 |

Table 4 shows clearly that the effect of improved flexibility after ageing cannot be achieved by increasing the quantity of stabiliser. On the other hand it was shown that an increased quantity of lead stabiliser gave rise to poorer flexibility after ageing. One possible cause of this might be that the lead stabiliser contributes to splitting and thus the reduction in softener. The addition of epoxidised soya bean oil or antioxidant did not produce the required effect either.

The weight loss for the materials A1, A4, A5 and A6 in tables 3 and 4 is obviously greater than for mixtures A2 and A3 which contain the copolymer VCM:GMA. In addition, the cold-flex value is considerably worse for all the materials in tables 3 and 4 in comparison with A2 and A3.

### Example 3

A test was carried out replacing the plasticiser trimellitate in the formulations A1 and A2 with a softener of the phthalic type, diundecylphthalate (DUP). The formulations are shown in table 5.

**TABLE 5**

| Formulation | B1 | B2 |
|---|---|---|
| PVC homopolymer | 100 | - |
| Copolymer VCM:GMA 99:1 | - | 100 |
| DUP | 40 | 40 |
| Stabiliser/lubricant mix | 8 | 8 |
| Oxidised polyethene wax | 0.1 | 0.1 |

The results are given in table 6.

**TABLE 6**

| Formulation | B1 | B2 |
|---|---|---|
| Cold-flex before ageing (°C) | -12 | -12 |
| Cold-flex after ageing (°C) | -3 | -9 |
| Weight loss (%) | 11.1 | 6.8 |

The results in table 6 are similar to the results given in table 2. Replacing the PVC homopolymer with the copolymer VCM:GMA 99:1 gives clearly improved ageing properties. The weight loss in connection with ageing is less and the flexibility deteriorates much less than with ageing when the copolymer is used.

### Example 4

The stabiliser which is normally recommended for applications with extreme heat stress is dibasic lead phthalate. Comparative studies were therefore carried out with formulations with this type of stabiliser, see table 7.

**TABLE 7**

| Formulation | C1 | C2 | C3 |
|---|---|---|---|
| PVC homopolymer | 100 | - | - |
| Copolymer VCM:GMA 99:1 | - | 100 | - |
| Copolymer VCM:GMA 98:2 | - | - | 100 |
| Linear trimellitate | 50 | 50 | 50 |
| Dibasic lead phthalate | 7 | 7 | 7 |
| Ca-stearate⁵ | 1 | 1 | 1 |

| | | | |
|---|---|---|---|
| ⁵ Lubricant | | | |

The formulations in table 7 were aged at 155°C for 240 hours and the following results achieved as shown in table 8.

**TABLE 8**

| Formulation | C1 | C2 | C3 |
|---|---|---|---|
| Cold-flex before ageing | -21 | -20 | -22 |
| Cold-flex after ageing (°C) | -10 | -13 | -15 |
| Weight loss (%) | 8.2 | 4.7 | 5.9 |

Even in this case it was shown that the copolymers VCM:GMA 99:1 and 98:2 respectively (C2 and C3) are far superior to the formulations containing the homopolymer PVC (C1). The cold-flex deteriorated considerably less after ageing for C2 and C3 and the weight loss was also less.

With the present invention a method has been found for producing formulations of a PVC type which have better tolerance to ageing at high temperatures than normal PVC formulations.

## Claims

1. A procedure for preventing a reduction of flexibility for plasticised materials containing vinyl chloride, thermostabiliser and other common additives, after ageing at high temperature,
**characterised in that** a composition comprising 20-100 weight % copolymer of vinyl chloride (VC) and acrylate containing glycidyl (GA) and optionally another monomer in the weight ratios VC / GA / termonomer 80-99.9 / 10-0.1/10-0, 0-80 weight % of PVC and 0-80 weight % of other copolymers based on at least 70 % VCM, is used.

2. A procedure in accordance with claim 1,
**characterised in that** glycidyl acrylate, glycidyl butacrylate or glycidyl methacrylate is used as the comonomer containing glycidyl.

3. A procedure in accordance with claim 1,
**characterised in that** the termonomer used is vinyl acetate or an acrylate not containing glycidyl.

4. A procedure in accordance with claims 1-3,
**characterised in that** the material may contain chlorinated polyethene, EVA, a terpolymer between ethene, vinyl acetate and carbon monoxide, EBA, polyadipates or nitrile rubber.

5. The use of a thermoplastic PVC material comprising 20-100 weight % copolymer of vinyl chloride (VC) and acrylate containing glycidyl (GA) and optionally another monomer in the weight ratios VC / GA / termonomer 80-99.9 / 10-0.1 / 10-0, 0-80 weight % of PVC and 0-80 weight % of other copolymers based on at least 70 % VCM , for materials which need to be flexible after ageing at high temperature.

6. The use of the material in accordance with claim 5 for vehicle cables, hoses, sealing strips or packings.

## Patentansprüche

1. Verfahren zur Verhütung einer Reduktion der Biegsamkeit von plastizierten Materialien, welche Vinylchlorid, einen Thermostabilisator und andere gewöhnliche Zusatzstoffe enthalten, anschließend an eine Alterung bei hohen Temperaturen, dadurch gekennzeichnet, daß eine Zusammensetzung mit 20-100%, als Gewichtsprozent ausgedrückt, eines Copolymeres das sich aus Vinylchlorid (VC) und aus Glycidyl enthaltendem Acrylat (GA), sowie wahlweise aus einem anderen Monomeren in den Gewichtsverhältnissen VC / GA / Termonomer von 80-99,9 / 10-0 1 / 10-0 zusammensetzt, 0-80 Gewichts-% PVC und 0-80 Gewichts-% von anderen Copolymeren auf der Basis von mindestens 70% VCM, zum Einsatz kommt.

2. Verfahren gemäß Anspruch 1, dadurch gekennzeichnet, daß Glycidylacrylat, Glycidylbutacrylat oder Glycidylmethacrylat als das Glycidyl enthaltende Comonomer benutzt wird.

3. Verfahren gemäß Anspruch 1, dadurch gekennzeichnet, daß das benutzte Termonomer Vinylacetat ist oder ein Acrylat welches kein Glycidyl enthält.

4. Verfahren gemäß den Ansprüchen 1-3, dadurch gekennzeichnet, daß das Material chloriertes Polyethylen, EVA, ein Terpolymer aus Ethylen, Vinylacetat und Kohlenstoffmonoxid, EBA, Polyadipate oder Nitilkautschuk enthalten kann.

5. Anwendung eines thermoplastischen Materials aus PVC, welches 20-100%, als Gewichtsprozent ausgedrückt, eines Copolymeres das sich aus Vinylchlorid (VC) und aus Glycidyl enthaltendem Acrylat (GA) sowie wahlweise aus einem anderen Monomeren in den Gewichtsverhältnissen VC / GA / Termonomer von 80-99,9 / 10-0,1 / 10-0 zusammensetzt, 0-80 Gewichts-% PVC und 0-80 Gewichts-% von anderen Copolymeren auf der Basis von mindestens 70% VCM enthält, für Materialien welche anschließend an die Alterung bei hohen Temperaturen biegsam bleiben müssen.

6. Anwendung des Materials gemäß Anspruch 5 für Fahrzeugkabel, Schläuche, Dichtungsverschlüsse oder Dichtungskörper.

## Revendications

1. Procédé pour éviter une réduction de la flexibilité de matériaux plastifiés contenant du chlorure de vinyle, un thermostabilisateur et d'autres additifs ordinaires, à la suite d'un vieillissement à une température élevée, caractérisé en ce qu'un mélange comprenant 20-100% en poids de copolymère de chlorure de vinyle (VC - vinyl chloride) et de glycidyle contenant de l'acrylate (GA) et optionnellement d'un autre monomère dans des rapports en poids VC / GA / termonomére de 80-99,9 / 10-0,1 / 10-0, 0-80% en poids de PVC et 0-80% en poids d'autres copolymères à base d'au moins 70% de VCM, est utilisé.

2. Procédé suivant la revendication 1, caractérisé en ce que de l'acrylate de glycidyle, du butacrylate de glycidyle ou du méthacrylate de glycidyle est utilisé en tant que monomère contenant le glycidyle.

3. Procédé suivant la revendication 1, caractérisé en ce que le termonomère utilisé est l'acétate de vinyle ou un acrylate ne contenant pas de glycidyle.

4. Procédé suivant les revendications 1-3, caractérisé en ce que le matériau peut contenir du polyéthylène chloré, de l'EVA, un terpolymère entre l'éthylène, l'acétate de vinyle et le monoxyde de carbone, de l'EBA, des polyadipates ou du caoutchouc nitrile.

5. L'application d'un matériau thermoplastique de PVC contenant de 20-100% en poids de copolymère de chlorure de vinyle (VC) et de glycidyle contenant de l'acrylate (GA) et optionnellement d'un autre monomère dans les rapports en poids VC / GA / termonomère de 80-99,9 / 10-0,1 / 10-0, 0 - 80% en poids de PVC et 0-80% en poids d'autres copolymères à base d'au moins 70% de VCM, pour des matériaux qui doivent être flexibles à la suite d'un vieillissement à une température élevée.

6. L'application du matériau suivant la revendication 5 pour des câbles de véhicules, des tuyaux, des bandes d'étanchéité ou des garnitures d'étanchéité.
